# EUROPEAN PATENT APPLICATION

(11) **EP 2 189 661 A1**
(43) Date of publication of application: **26.05.2010**
(21) Application number: 08852741.1
(22) Date of filing: 24.10.2008
(51) Int. Cl.: F04B 39/00, F04B 39/12

(54) **INVERTER-INTEGRATED ELECTRIC COMPRESSOR**

(30) Priority: 22.11.2007 JP 2007303369
(71) Applicant: Mitsubishi Heavy Industries, Ltd., Tokyo 108-8215 (JP)
(72) Inventor: WATANABE, Takayuki, Kiyosu-shi Aichi 452-8561 (JP); NAKAGAMI, Takashi, Nagoya-shi Aichi 453-8515 (JP); NAKANO, Koji, Nagoya-shi Aichi 453-8515 (JP)
(74) Representative: Henkel, Feiler & Hänzel
(86) International application number: PCT/JP2008/069355
(87) International publication number: WO 2009/066541

(57) **Abstract**

An inverter-integrated electric compressor in which it is possible to make an inverter device and an inverter accommodating section small and compact and which, at the same time, has high reliability enabling interference of electromagnetic noise from a high-voltage bus-bar to be suppressed is provided. An inverter-integrated electric compressor (1) in which an inverter accommodating section (11) is provided on a periphery of a housing (2), and an inverter device (20) is accommodated inside thereof, wherein the inverter device (20) includes a power circuit board on which a semiconductor switching device and so on are mounted and a control board on which control and communication circuits and so on operating at low voltage are mounted, wherein a high-voltage bus-bar (25) connecting a high-voltage line and high-voltage components (21, 22, 23) disposed in the interior of the inverter accommodating section (11) is disposed in a space above the power circuit board and the control board, and wherein a shield plate (29) is provided between the high-voltage bus-bar (25) and an inverter module (24).

## Description

### Technical Field

The present invention relates to inverter-integrated electric compressors that are constructed by integrating inverter devices with housings accommodating electric motors and compression mechanisms and that are suitable for application to compressors for vehicle air conditioners.

### Background Art

Recently, various inverter-integrated electric compressors constructed by integrating inverter devices have been proposed as compressors for vehicle air-conditioners mounted in vehicles. Such an inverter-integrated electric compressor for a vehicle air-conditioner is provided with an inverter accommodating section (inverter box) that is disposed on the periphery of a housing accommodating an electric motor and a compressing mechanism, and an inverter device that is accommodated in the interior thereof and that converts DC power supplied from a high-voltage power supply into three-phase AC power and supplies it to the electric motor via glass-sealed terminals. In this way, the rotational speed of the electric compressor can vary in response to the air conditioning load. An example of such an inverter-integrated electric compressor is that described in, for example, Patent Document 1.

The inverter device is constructed of a power circuit board on which are mounted semiconductor power switching devices to which high voltage is usually input and a power-system control circuit for operating them and so on; a control board (printed board) on which control and communication circuits that operate at low voltage are mounted; and high-voltage components, such as a smoothing capacitor (head capacitor), an inductor coil, and a common mode coil, that are connected to a high-voltage power supply line. In such an inverter device, a high-voltage ground region where a high-voltage system of the power-system circuit and so on is grounded and a low-voltage ground region where a low-voltage system of the control and communication circuits and so on is grounded are disposed with an insulation distance maintained therebetween. Separating a high-voltage ground region and a low-voltage ground region from each other and blocking noise from the high-voltage side are known from Patent Document 2, etc.

Patent Document 1:
   Publication of Japanese Patent No. 3786356
Patent Document 2:
   Japanese Unexamined Patent Application, Publication No. 2005-316373

### Disclosure of Invention

For compressors for vehicle air-conditioners, with the increasing density in the engine compartments of vehicles, there is a need for reducing the size of compressors for vehicle air conditioners even more in order to ensure their mounting ability. Therefore, for an inverter-integrated electric compressor having an integrated inverter device, there is a strong need for reducing the size of the inverter accommodating section containing the inverter device. Under such circumstances, electrical wiring for high-voltage components, such as a smoothing capacitor (head capacitor), an inductor coil, and a common mode coil, connected between a power circuit board and P-N terminals to which a high-voltage cable is connected, is provided via a high-voltage bus-bar typically formed by integrally molding a plurality of bus-bars with insulating resin material. The positioning of this high-voltage bus-bar is a problem in reducing the size of the inverter accommodating section.

In other words, since the high-voltage bus-bar is disposed with a certain distance from the edge sections of the power circuit board and the control board so as to reduce the effect of electromagnetic noise to the low-voltage ground-region circuit, the inverter accommodating section increases in size by the same amount. Modularization of the above-described power circuit board and control board (printed board) has been advancing as one way of making the inverter device and inverter accommodating section small and compact. However, since the space for passing the high-voltage bus-bar becomes even more restricted when the power circuit board and the control board are integrated by modularization, it is difficult to make the inverter accommodating section small because the high-voltage bus-bar has to be disposed around the inverter module while eliminating the effect of electromagnetic noise. Thus, the size reduction achieved by modularization is not sufficiently effective.

The present invention has been conceived in light of the circumstances described above, and it is an object of the present invention to provide an inverter-integrated electric compressor in which it is possible to make an inverter device and an inverter accommodating section even smaller and compact and which, at the same time, has high reliability enabling interference of electromagnetic noise from a high-voltage bus-bar to be suppressed.

To solve the problems described above, the inverter-integrated electric compressor according to the present invention provides the following solutions.
Specifically, an inverter-integrated electric compressor according to the present invention is provided with an inverter accommodating section is provided on a periphery of a housing accommodating an electric motor and a compressing mechanism, and an inverter device that converts DC power into three-phase AC power and supplies the three-phase AC power to the electric motor is accommodated inside thereof, wherein the inverter device includes a power circuit board on which a semiconductor switching device and so on are mounted and a control board on which control and communication circuits and so on operating at low voltage are mounted, wherein a high-voltage bus-bar connecting a high-voltage line and high-voltage components disposed in the interior of the inverter accommodating section is disposed in a space above the power circuit board and the control board, and wherein a shield plate is provided between the high-voltage bus-bar and the control board.

According to the present invention, since the high-voltage bus-bar connecting the high-voltage line (P-N terminals), the high-voltage components (capacitor, inductor coil, common mode coil, etc.), and the power circuit board is disposed in the space above the power circuit board and the control board, a space for disposing the high-voltage bus-bar does not have to be ensured at the peripheral area of the power circuit board and the control board, and thus, the inverter device and the inverter accommodating unit can be reduced in size by the same amount. Since the shield plate is provided between the high-voltage bus-bar and the control board, electromagnetic noise interference between the high-voltage bus-bar and the control and communication circuits, etc. in the low-voltage ground region of the control board can be reduced. In this way, the inverter device and the inverter accommodating section provided in the electric compressor can be made even more small and compact, the need for reducing the size and improving the mounting ability is satisfied, and, at the same time, the occurrence of malfunctions due to electromagnetic noise interference can be prevented so as to increase the reliability of the inverter-integrated electric compressor.

With the inverter-integrated electric compressor according to the present invention, the power circuit board and the control board may be integrally modularized into an inverter module.

According to this configuration, since the high-voltage bus-bar can be disposed through the space above the power circuit board and the control board even when the power circuit board and the control board are integrally modularized into an inverter module, the high-voltage bus-bar does not have to be disposed around the inverter module, and thus, the inverter accommodating section can be made small. In this way, the advantage of modularization can be applied to make the inverter device and the inverter accommodating section small and compact.

With one of the above-described inverter-integrated electric compressors according to the present invention, the shield plate may include a metal plate having an identical electric potential as the inverter accommodating section integrated with the housing.

According to this configuration, since the shield plate is constructed of a metal plate having the same electric potential as the inverter accommodating section integrated with the housing, propagation of electromagnetic noise from the high-voltage bus-bar to the low-voltage ground region of the control board can be shielded and released at the inverter accommodating section and the housing. Consequently, electromagnetic noise interference can be reduced, and thus the reliability of the inverter device and the electric compressor can be increased.

With one of the above-described inverter-integrated electric compressors according to the present invention, an area of the shield plate may be at least larger than a projection area of the high-voltage bus-bar.

According to this configuration, since the area of the shield plate is larger than the projection area of the high-voltage bus-bar, electromagnetic noise from the high-voltage bus-bar can be shielded, and propagation to the low-voltage ground region of the control board can be reduced. In this way, electromagnetic noise interference can be suppressed, and thus the reliability of the inverter device and the electric compressor can be increased.

With one of the above-described inverter-integrated electric compressors according to the present invention, the shield plate may be provided with a vertical section extending upward and surrounding the high-voltage bus-bar at the peripheral edge thereof.

According to this configuration, since the shield plate is provided with a vertical section extending upward and surrounding the high-voltage bus-bar at the peripheral edge thereof, electromagnetic noise from the high-voltage bus-bar can be shielded also by the vertical section. In this way, propagation of electromagnetic noise to the low-voltage ground region of the control board can be reduced, and electromagnetic noise interference can be suppressed. Moreover, since the modulus of section of the shield plate can be increased by the vertical section, the strength of the shield plate can be increased, and vibration can be prevented.

With one of the above-described inverter-integrated electric compressors according to the present invention, an area of the shield plate corresponding to a corner section of the high-voltage bus-bar where noise might be superimposed may be larger than other areas.

According to this configuration, since the area of the shield plate corresponding to the corner section of the high-voltage bus-bar where noise might be superimposed is larger than other areas, even at the corner section of the high-voltage bus-bar where noise might be superimposed, noise can be shielded by the enlarged-area section of the shield plate. In this way, propagation of electromagnetic noise to the low-voltage ground region of the control board can be reduced, and electromagnetic noise interference can be suppressed.

With one of the above-described inverter-integrated electric compressors according to the present invention, the high-voltage bus-bar and the shield plate may be tightly fastened to the inverter accommodating section at at least one location.

According to this configuration, since the high-voltage bus-bar and the shield plate are tightly fastened together to the inverter accommodating section at at least one location, the high-voltage bus-bar and the shield plate can be integrally fixed to the inverter accommodating section. Consequently, noise and so on due to vibration, deformation, and/or mutual interference of the high-voltage bus-bar and the shield plate can be suppressed.

With one of the above-described inverter-integrated electric compressors according to the present invention, the high-voltage bus-bar and the shield plate may be tightly fastened together in the center area thereof.

According to this configuration, since the high-voltage bus-bar and the shield plate are tightly fastened together at one location in the center area thereof, each of these parts can effectively suppress noise and so on due to vibration, deformation, and/or mutual interference by being tightly fastened together.

According to the present invention, the inverter accommodating section is made small and compact by utilizing the space above the power circuit board and the control board, and propagation of electromagnetic noise from the high-voltage bus-bar to the control board is reduced by providing the shield plate between the high-voltage bus-bar and the control board; therefore, the inverter device and the inverter accommodating section provided in the electric compressor can be made even more compact, the need for reducing the size and improving the mounting ability is satisfied, and, at the same time, the occurrence of malfunctions due to electromagnetic noise interference can be prevented so as to increase the reliability of the inverter-integrated electric compressor.

### Brief Description of Drawings

[Fig. 1] Fig. 1 is a partial longitudinal sectional view showing, in a cutaway form, an inverter accommodating section of an inverter-integrated electric compressor according to a first embodiment of the present invention.
[Fig. 2] Fig. 2 is a plan view of a state in which a cover member of the inverter accommodating section of the inverter-integrated electric compressor illustrated in Fig. 1 is removed.
[Fig. 3] Fig. 3 is a plan view of a shield plate of the inverter-integrated electric compressor illustrated in Fig. 1.
[Fig. 4] Fig. 4 is a partial longitudinal sectional view of a shield plate of an inverter-integrated electric compressor according to a second embodiment of the present invention.

### Explanation of Reference Signs:

- 1:: inverter-integrated electric compressor
- 2:: housing
- 9:: electric motor
- 11:: inverter accommodating section
- 20:: inverter device
- 21:: capacitor (high-voltage component)
- 22:: inductor coil (high-voltage component)
- 23:: common mode coil (high-voltage component)
- 24:: inverter module
- 25:: high-voltage bus-bar
- 29:: shield plate
- 29A:: arc section
- 29B:: vertical section
- 32:: screws

### Best Mode for Carrying Out the Invention

Embodiments of the present invention will be described below with reference to the drawings.

### First Embodiment

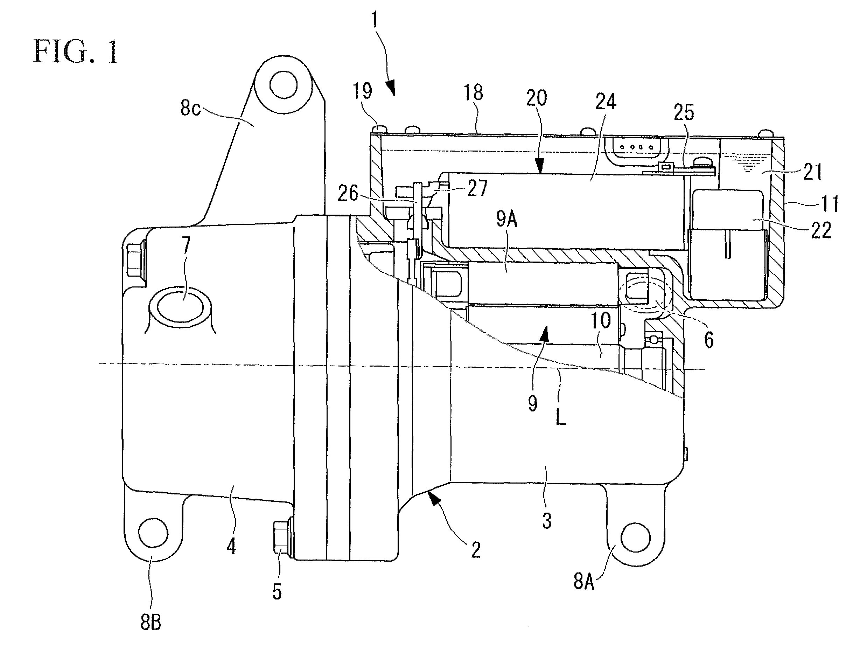

A first embodiment of the present invention will be described with reference to Figs. 1 to 3.

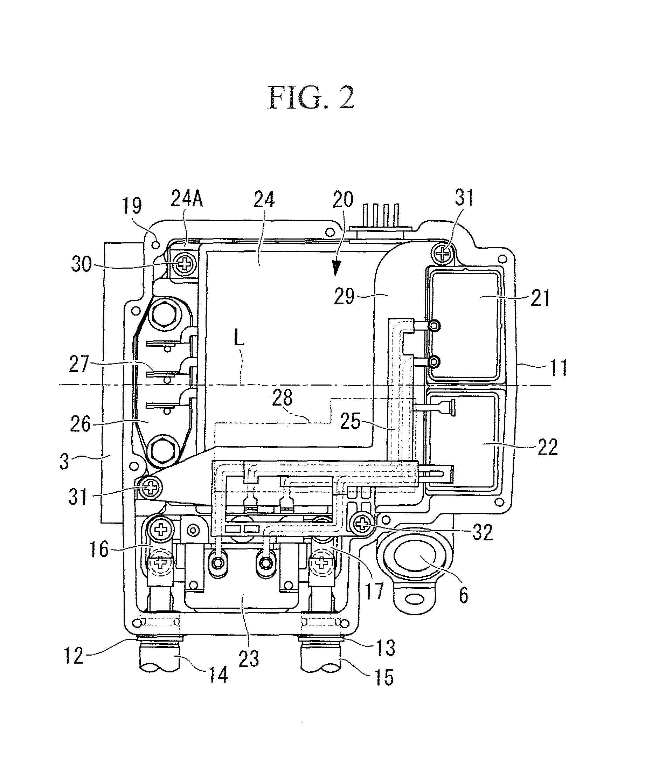

Fig. 1 is a partial longitudinal sectional view showing, in a cutaway form, an inverter accommodating section of an inverter-integrated electric compressor according to a first embodiment of the present invention. Fig. 2 is a plan view of a state in which a cover member thereof is removed.
An inverter-integrated electric compressor 1 includes a housing 2 that forms the outer shell thereof. The housing 2 is constructed by integrating, by tightly fastening with bolts 5, a motor housing 3 for accommodating an electric motor 9 and a compressor housing 4 for accommodating a compressing mechanism, which is not shown in the drawing. The motor housing 3 and the compressor housing 4 are formed of aluminum alloy by aluminum die-casting.

The electric motor 9 and the compressing mechanism, which is not shown in the drawing, accommodated inside the housing 2 are linked via a motor shaft 10 (see Fig. 1), and the compressing mechanism is configured to be driven by rotation of the electric motor 9. A refrigerant suction port 6 (see Fig. 2) is provided at one end (on the right side in Fig. 1) of the motor housing 3, so that low-temperature, law-pressure refrigerant gas taken in from this refrigerant suction port 6 into the motor housing 3 flows around the electric motor 9 in the motor axis L direction and is then taken into the compressing mechanism, where it is compressed. High-temperature, high-pressure refrigerant gas compressed by the compressing mechanism is released into the compressor housing 4 and is then expelled to the outside via a discharge port 7 provided at the other end (on the left side in Fig. 1) of the compressor housing 4.

The housing 2 has three mounting legs 8A, 8B, and 8C at a total of three positions: two at a lower part at one end (on the right side in Fig. 1) of the motor housing 3 and a lower part at one end (on the left side in Fig. 1) of the compressor housing 4, and one at an upper part of the compressor housing 4. The inverter-integrated electric compressor 1 is mounted by securing these mounting legs 8A, 8B, and 8C to a side wall, etc. of a driving motor, which is provided inside the engine compartment of the vehicle, with a bracket and bolts. The inverter-integrated electric compressor 1 is usually cantilevered at three points on the upper and lower sides with a securing bracket such that the motor shaft direction L is in the front-to-back direction or the left-to-right direction.

A box-shaped inverter accommodating section 11 is integrated with the periphery of the motor housing 3 at the upper section thereof. Fig. 1 is a partial longitudinal sectional view showing, in a cutaway form, the inverter accommodating section 11. As shown in Figs. 1 and 2, the inverter accommodating section 11 is shaped like a box that is open at the top and surrounded by a peripheral wall having a predetermined height. The upper opening is sealed with a cover member 18 secured with screws 19, with a sealing material (not shown) therebetween. Two power-supply-cable lead-out holes 12 and 13 are provided on a side surface of the inverter accommodating section 11 so that an inverter device 20 mounted inside the inverter accommodating section 11 and a high-voltage power supply can be connected via two power-supply cables 14 and 15.

The inverter device 20 mounted inside the inverter accommodating section 11 is constructed of P-N terminals 16 and 17 to be connected to the power-supply cables 14 and 15; high-voltage components, such as a capacitor 21 , an inductor coil 22, and a common mode coil 23, which are provided on a high-voltage power supply line; an inverter module 24 that forms the core of the inverter device 20; a high-voltage bus-bar 25 including a plurality of integrated bus bars, which constitute the electrical wiring among the high-voltage components, the P-N terminals 16 and 17, and the inverter module 24, inside the inverter device 20, and being composed of insert-molded insulating resin material; and glass-sealed terminals 26 that supply three-phase AC power, which is converted at the inverter device 20, to the electric motor 9.

The inverter module 24 is a modularized cuboid component formed by integrating a power circuit board, on which are mounted a plurality of semiconductor power switching devices (power devices, such as IGBTs) (not shown) and a power-system control circuit that operates them, and a control board (printed board) board, which is provided with control and communication circuits having devices operating at low voltage, such as a CPU. Attachment legs 24A provided at four corners are tightly fastened to the interior of the inverter accommodating section 11 with screws 30. An input-side terminal (not shown) provided on the inverter module 24 is connected to the high-voltage power supply line connected to the P-N terminals 16 and 17, and output-side U-V-N terminals 27 are connected to the glass-sealed terminals 26.

In the above-described inverter device 20, the high-voltage bus-bar 25 constituting the electrical wiring among the P-N terminals 16 and 17 of the high-voltage line, the high-voltage components, such as the capacitor 21, the inductor coil 22, and the common mode coil 23, and the inverter module 24 is flat and substantially L-shaped and, as shown in Figs. 1 and 2, is disposed in a space above the inverter module 24 inside the inverter accommodating section 11. To reduce the propagation of electromagnetic noise from the high-voltage bus-bar 25 to the control and communication circuits, etc. provided in a low-voltage ground circuit region 28 in the inverter module 24, a shield plate 29 is provided between the high-voltage bus-bar 25 and the inverter module 24.

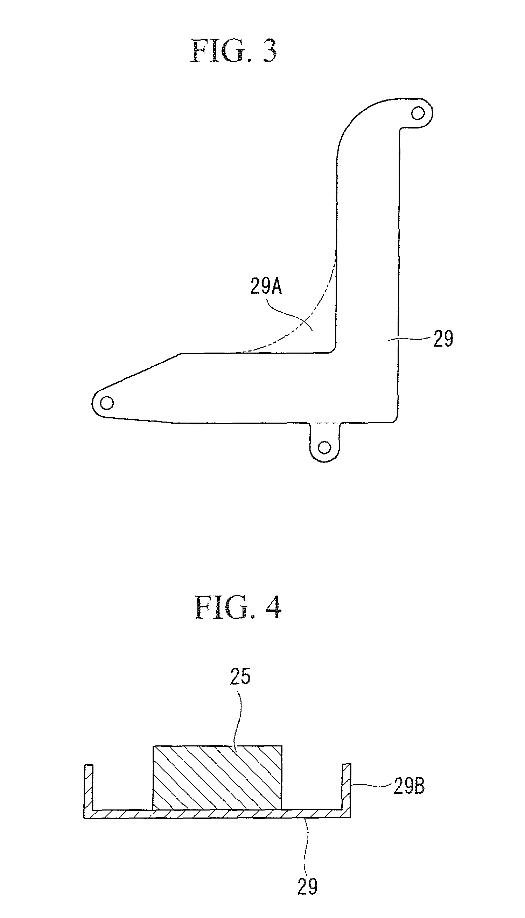

The shield plate 29 is constructed of an aluminum alloy thin plate so that it has the same electric potential as the housing 2 (motor housing 3) of the electric compressor 1, and both ends thereof are tightly fastened with screws 31 to the inverter accommodating section 11 integrated with the motor housing 3. As shown in Figs. 2 and 3, the shield plate 29 is constructed such that it has an external shape that is substantially L-shaped, which is substantially the same as the L-shaped high-voltage bus-bar 25, and such that it has an area larger than the projection area of the high-voltage bus-bar 25.

The above-described high-voltage bus-bar 25 and the shield plate 29 are disposed in an overlapping manner such that the lower surface and upper surface thereof contact each other, and the two components are tightly fastened with screws 32 at substantially the center area thereof to the inverter accommodating section 11. The number of locations where they are tightly fastened together may be at least one, or may instead be a plurality of locations.

According to this embodiment with the above-described configuration, the following advantages are achieved.
DC power supplied from a high-voltage power supply mounted in the vehicle to the P-N terminals 16 and 17 of the inverter device 20 of the electric compressor 1 via the power-supply cables 14 and 15 is regulated by the high-voltage components, such as the head capacitor 21, the inductor coil 22, and the common mode coil 23, is converted into three-phase AC power having a control command frequency instructed by a higher-level control device (not shown) by the switching operation of the plurality of semiconductor power switching devices (such as IGBTs) mounted in the inverter module 24, and is then supplied from the U-V-W terminals 27 to the electric motor 9 inside the motor housing 3 via the glass-sealed terminals 26.

In this way, the electric motor 9 is rotationally driven at the control command frequency, and the compression mechanism is operated. By operating the compression mechanism, low-temperature, low-pressure refrigerant gas is taken into the motor housing 3 through the refrigerant suction port 6. This refrigerant flows around the electric motor 9 to the compressor housing 4 in the motor axis L direction, is taken in to the compression mechanism, is compressed to a high-temperature, high-pressure state, and is then discharged into the compressor housing 4. The high-temperature, high-pressure refrigerant is discharged outside the electric compressor 1 from the discharge port 7. During this period, the low-temperature, low-pressure refrigerant taken in from the refrigerant suction port 6 to the motor housing 3 and flowing in the motor axis L direction cools the heat-radiating components of the inverter device 20, such as the high-voltage components and the semiconductor power switching devices installed in the inverter accommodating section 11, via the walls of the motor housing 3.

In the inverter device 20, the high-voltage components, such as the capacitor 21, the inductor coil 22, and the common mode coil 23, are connected to the high-voltage power supply line via the high-voltage bus-bar 25, and high voltage is applied to the high-voltage bus-bar 25. Since the high-voltage bus-bar 25 is disposed in the space above the inverter module 24, when electromagnetic noise is radiated from the high-voltage bus-bar 25, it propagates to the low-voltage circuit of the low-voltage ground circuit region 28 in the inverter module 24 disposed directly below, generating electromagnetic noise interference that could cause malfunction.

Since, in this embodiment, the aluminum alloy shield plate 29 is provided between the high-voltage bus-bar 25 and the inverter module 24, so as to shield the electromagnetic noise from the high-voltage bus-bar 25, the propagation of electromagnetic noise from the high-voltage bus-bar 25 to the low-voltage circuit, etc. provided in the low-voltage ground circuit region 28 of the inverter module 24 can be reduced and released at the inverter accommodating section 11 and the housing 2, having the same electric potential. In this way, occurrence of malfunctions due to electromagnetic noise interference can be prevented, and the reliability of the inverter device 20 and the electric compressor 1 can be increased.

Since the area of the shield plate 29 is larger than the projection area of the high-voltage bus-bar 25, electromagnetic noise from the high-voltage bus-bar 25 can be shielded in a wide range, and propagation to the low-voltage ground circuit region 28 of the inverter module 24 can be further reduced. In this way, electromagnetic noise interference can be suppressed, and the reliability of the inverter device 20 and the electric compressor 1 can be increased.

Since the high-voltage bus-bar 25 and the shield plate 29 are tightly fastened together with the screws 32 at one location in the center area thereof to the inverter accommodating section 11, the high-voltage bus-bar 25 and the shield plate 29 can be integrally fixed to the inverter accommodating section 11. In this way, noise and so on due to vibration, deformation, and/or mutual interference of the high-voltage bus-bar 25 and the shield plate 29 can be effectively suppressed by tightly fastening them together at a minimum number of locations (one location). Consequently, the occurrence of noise can be efficiently prevented.

Moreover, by modularizing the power circuit board and the control board (printed board) of the inverter device 20 into the inverter module 24, the inverter device 20 can be made small and compact. In addition, since the high-voltage bus-bar 25 that provides the electrical wiring for the high-voltage components, such as the capacitor 21, the inductor coil 22, and the common mode coil 23, is disposed utilizing the space above the inverter module 24, extra space for disposing it in the high-voltage bus-bar 25 does not have to be ensured, and the inverter accommodating section 11 can be made compact to suit the inverter module 24. In this way, the inverter device 20 and the inverter accommodating section 11 provided in the electric compressor 1 can be made even more compact, and the need for reducing the size and improving the mounting ability of the electric compressor 1 can be satisfied.

### Second Embodiment

Next, a second embodiment of the present invention will be described with reference to Figs. 3 and 4.
This embodiment differs from the above-described first embodiment in the configuration of the shield plate 29. Since other aspects are the same as those in the first embodiment, descriptions thereof will be omitted.
In this embodiment, as shown in Fig. 3, since there is a possibility that electromagnetic noise might be superimposed at a corner section of the high-voltage bus-bar 25 having an L-shape, to correspond to this section, an arc section (enlarged-area section) 29A formed by connecting a corner section of the shield plate 29 with a large arc is provided so as to increase the area of the section corresponding to the corner section of the high-voltage bus-bar 25, where noise might be superimposed.

As shown in Fig. 4, the shield plate 29 is constructed such that a vertical section 29B extending upward and surrounding the high-voltage bus-bar 25 is provided at the peripheral edge thereof. Moreover, the shield plate 29 is integrally configured by being bonded to the lower surface of the high-voltage bus-bar 25.
As described above, by enlarging the area of the shield plate 29 by providing the arc section 29A corresponding to the corner section of the high-voltage bus-bar 25 where noise might be superimposed, noise can be shielded at sections where it might occur. Accordingly, propagation of electromagnetic noise to the low-voltage ground circuit region 28 of the inverter module 24 can be reduced, and thus electromagnetic noise interference can be suppressed.

By proving the vertical section 29B extending upward and surrounding the high-voltage bus-bar 25 at the peripheral edge of the shield plate 29, the shielding effect on electromagnetic noise from the high-voltage bus-bar 25 can be increased. In this way, propagation of the electromagnetic noise to the low-voltage ground circuit region 28 of the inverter module 24 can be reduced, and malfunctions and so on due to electromagnetic noise interference can be prevented. Furthermore, since the modulus of section of the shield plate 29 is increased by the vertical section 29B, the strength of the shield plate 29 can be increased, and vibration can be prevented. Moreover, since the shield plate 29 and the high-voltage bus-bar 25 are integrally bonded, mutual interference caused by these parts vibrating individually can be prevented, and the occurrence of noise caused thereby can be prevented.

The present invention is not limited to the embodiments described above, and various modifications may be made so long as they do not depart from the spirit of the invention. For example, the compressing mechanism provided inside the compressor housing 4 is not particularly limited, and any type of compressing mechanism may be used, e.g., a rotary type, a scroll type, or a swash plate type. Moreover, the inverter accommodating section 11 does not necessarily have to be integrated with the motor housing 3; separately formed parts may be assembled into a single unit.

In the above-described embodiments, examples in which the power circuit board and the control board, constituting the inverter device 20, are modularized are described. However, the present invention is not limited thereto and may be applied in a similar manner to a configuration in which the power circuit board and the control board are constructed separately and provided separately inside the inverter accommodating section 11 by providing a high-voltage bus-bar in a space above the power circuit board and the control board and providing a shield plate between this high-voltage bus-bar and the control board. Of course, the present invention also includes such a configuration.

## Claims

1. An inverter-integrated electric compressor in which an inverter accommodating section is provided on a periphery of a housing accommodating an electric motor and a compressing mechanism, and an inverter device that converts DC power into three-phase AC power and supplies the three-phase AC power to the electric motor is accommodated inside thereof,
wherein the inverter device includes a power circuit board on which a semiconductor switching device and so on are mounted and a control board on which control and communication circuits and so on operating at low voltage are mounted,
wherein a high-voltage bus-bar connecting a high-voltage line and high-voltage components disposed in the interior of the inverter accommodating section is disposed in a space above the power circuit board and the control board, and
wherein a shield plate is provided between the high-voltage bus-bar and the control board.

2. The inverter-integrated electric compressor according to Claim 1, wherein the power circuit board and the control board are integrally modularized into an inverter module.

3. The inverter-integrated electric compressor according to Claim 1 or 2, wherein the shield plate comprises a metal plate having an identical electric potential as the inverter accommodating section integrated with the housing.

4. The inverter-integrated electric compressor according to one of Claims 1 to 3, wherein an area of the shield plate is at least larger than a projection area of the high-voltage bus-bar.

5. The inverter-integrated electric compressor according to one of Claims 1 to 4, wherein the shield plate is provided with a vertical section extending upward and surrounding the high-voltage bus-bar at the peripheral edge thereof.

6. The inverter-integrated electric compressor according to one of Claims 1 to 5, wherein an area of the shield plate corresponding to a corner section of the high-voltage bus-bar where noise might be superimposed is larger than other areas.

7. The inverter-integrated electric compressor according to one of Claims 1 to 6, wherein the high-voltage bus-bar and the shield plate are tightly fastened to the inverter accommodating section at at least one location.

8. The inverter-integrated electric compressor according to Claim 7, wherein the high-voltage bus-bar and the shield plate are tightly fastened together in the center area thereof.
